# EUROPÄISCHE PATENTANMELDUNG

(11) **EP 2 279 923 A2**
(43) Veröffentlichungstag der Anmeldung: **02.02.2011**
(21) Anmeldenummer: 10006863.4
(22) Anmeldetag: 02.07.2010
(51) Int. Cl.: B60W 30/02

(54) **Verfahren zur Unterstützung eines Fahrers eines Kraftfahrzeugs während eines Schleudervorgangs und Kraftfahrzeug**

(30) Priorität: 31.07.2009 DE 102009035634
(71) Anmelder: Audi AG, 85045 Ingolstadt (DE)
(72) Erfinder: Buhlmann, Markus, 86562 Berg im Gau (DE)
(74) Vertreter: Thielmann, Frank

(57) **Zusammenfassung**

Verfahren zur Unterstützung eines Fahrers eines Kraftfahrzeugs während eines Schleudervorgangs, wobei
- von einem Fahrwerkregelsystem ein Schleuderzustand detektiert wird,
- aus wenigstens einem die Fahrdynamik beschreibenden, durch das Fahrwerkregelsystem bestimmten Parameter eine das Kraftfahrzeug stabilisierende Fahrtrichtung ermittelt wird,
- durch wenigstens ein weiteres Fahrzeugsystem ein den Blick des Fahrers auf die ermittelte stabilisierende Fahrtrichtung lenkender Hinweis erzeugt wird.

## Beschreibung

Die Erfindung betrifft ein Verfahren zur Unterstützung eines Fahrers eines Kraftfahrzeugs während eines Schleudervorgangs sowie ein Kraftfahrzeug.

Schleudervorgänge von Kraftfahrzeugen stellen noch immer eine Gefahr im Straßenverkehr dar. Um diese Gefahren zu reduzieren, sind Fahrwerkregelsysteme bekannt. Das bekannteste Beispiel hierfür sind die sogenannten ESP-Systeme (Elektronisches Stabilitätsprogramm, häufig auch ESC - Electronic Stability Control). Solche Systeme versuchen, durch gezieltes Bremsen einzelner Räder, ein Schleudern des Fahrzeug zu verhindern oder einen Schleuderzustand möglichst schnell zu beenden, um dem Fahrer die Kontrolle über das Fahrzeug zu erhalten.

Um einen Schleuderzustand zu detektieren, vergleicht das ESP-System respektive das ihm zugeordnete Steuergerät ständig, beispielsweise bis zu 100 mal pro Sekunde, den tatsächlichen Zustand des Kraftfahrzeugs mit dem Fahrerwunsch, indem die Fahrdynamik beschreibende Parameter betrachtet werden. Beispielsweise liefert ein Lenkwinkelsensor den Fahrerwunsch bezüglich der Fahrtrichtung, Beschleunigungssensoren, Drehratensensoren und Drehzahlsensoren, häufig zusätzlich auch ein Querbeschleunigungssensor, liefern Daten über die tatsächlichen fahrdynamischen Eigenschaften des Kraftfahrzeugs. Beispielsweise kann das ESP-System die Solldrehrate berechnen und mit der Istdrehrate vergleichen, um einen Schleuderzustand zu detektieren und entsprechende Gegenmaßnahmen einzuleiten, die dann beispielsweise an ein Bremsensteuergerät übergeben werden können, falls letzteres nicht ohnehin in das ESP-System integriert ist.

Durch solche Fahrwerkregelsysteme werden mithin die Fahrdynamik beschreibende Parameter ermittelt, im Hinblick auf einen Schleuderzustand ausgewertet und Gegenmaßnahmen hauptsächlich bezüglich von Bremsaktionen eingeleitet. Dabei ist es häufig auch üblich, dass weitere Parameter durch Fahrwerkregelsysteme bestimmt werden, beispielsweise auch ein Schwimmwinkel, also der Winkel, um den sich das Kraftfahrzeug aus der Wunschrichtung gedreht hat, die Schwimmwinkelgeschwindigkeit oder auch die Gierwinkelabweichung. Diese Parameter können dann beispielsweise zur Berechnung von Rückstellmomenten verwendet werden.

Nichtsdestotrotz kann es auch mit diesen Fahrwerkregelsystemen dazu kommen, dass außerhalb des sogenannten Grenzbereichs gefahren wird, das bedeutet, dass das Fahrzeug trotz beispielsweise eines ESP-Systems um die Hochachse giert, beispielsweise, wenn ein für die Wirkung des ESP-Systems notwendiger Lenkeingriff nicht stattfindet. In derartigen Schleuderzuständen ist es bekannt, dass der Fahrer in dieser kritischen Situation dazu neigt, den Blick nicht dahin zu lenken, wo er hinfahren sollte, um die Stabilität des Kraftfahrzeugs wieder herzustellen, sondern dorthin, wohin sich das Kraftfahrzeug dreht. Untersuchungen haben gezeigt, dass Fahrer das Kraftfahrzeug meist dahin lenken, wohin sie auch schauen. Dies kann im schlimmsten Fall dazu führen, dass der Fahrer den Blick auf ein mögliches Kollisionsobjekt, beispielsweise einen Baum, fixiert, und es mit diesem letztlich auch zu einer Kollision kommt.

Ein Verfahren zum Unterstützen des Fahrers in fahrdynamischen Grenzsituationen durch Aufbringen eines Lenkmoments wird durch DE 103 54 662 A1 offenbart. Dort wird vorgeschlagen, ein Moment in einer Richtung, in der sich das Fahrzeug stabilisiert, auf das Lenkrad auszuüben, das dem Fahrer anzeigt, in welche Richtung er lenken muss, um das schleudernde bzw. übersteuernde Fahrzeugs möglichst schnell wieder abzufangen. Dieses Lenkmoment wird dann so lange aufrechterhalten, bis sich die Ist-Gierrate wieder abbaut. Mithin wird dort haptisch eine Lenkrichtung dem Fahrer zur Kenntnis gebracht.

Ein ähnliches Verfahren offenbart die DE 101 41 425 A1, worin ein fahrzustandsabhängiges additives Zusatzmoment bei einem Schleudervorgang generiert werden soll, welches Zusatzmoment eine haptische Rückmeldung geben soll, in welche Lenkrichtung das Lenkrad und damit die lenkbaren Räder zu steuern sind, um die Fahrstabilität wieder zu erlangen bzw. zu erhöhen. Auch dort wird dem Fahrer mithin eine Richtung, in die das Lenkrad zu bewegen ist, haptisch zur Kenntnis gebracht.

Der Erfindung liegt daher die Aufgabe zugrunde, ein Verfahren zur Unterstützung eines Fahrers eines Kraftfahrzeugs während eines Schleudervorgangs anzugeben, dass die Gefahr solcher Kollisionen verringert und den Fahrer dabei unterstützt, durch korrektes Gegenlenken die Kontrolle über das Kraftfahrzeug wiederzuerlangen.

Zur Lösung dieser Aufgabe ist erfindungsgemäß ein Verfahren zur Unterstützung eines Fahrers eines Kraftfahrzeugs während eines Schleudervorgangs vorgesehen, welches sich dadurch auszeichnet, dass
- von einem Fahrwerkregelsystem ein Schleuderzustand detektiert wird,
- aus wenigstens einem die Fahrdynamik beschreibenden, durch das Fahrwerkregelsystem bestimmten Parameter eine das Kraftfahrzeug stabilisierende Fahrtrichtung ermittelt wird,
- durch wenigstens ein weiteres Fahrzeugsystem ein den Blick des Fahrers auf die ermittelte stabilisierende Fahrtrichtung lenkender Hinweis erzeugt wird.

Es wird also vorgeschlagen, neben Maßnahmen zur Fahrwerksregelung den Fahrer nach der Art eines Fahrerassistenzsystems automatisch dabei zu unterstützen, durch Gegenlenken selbst stabilisierenden Einfluss auf sein Kraftfahrzeug auszuüben. Da, wie eingangs erläutert, der Fahrer grundsätzlich dazu tendiert, sein Kraftfahrzeug dorthin zu lenken, wohin er auch schaut, wird zunächst vorgeschlagen, die dem Fahrwerkregelsystem bekannten, die aktuelle bzw. gewollte Fahrdynamik beschreibenden Parameter zu nutzen, um eine das Kraftfahrzeug stabilisierende Fahrtrichtung zu ermitteln. Ein weiteres Fahrzeugsystem soll dann dazu angesteuert werden, die Aufmerksamkeit des Fahrers und somit auch seinen Blick auf die ermittelte Fahrtrichtung zu lenken, so dass dieser intuitiv einen Lenkvorgang einleitet, der zur Stabilisierung des Kraftfahrzeugs beiträgt. Das erfindungsgemäße Verfahren vereint also zwei vorteilhafte Effekte: Zum einen wird die Aufmerksamkeit des Fahrers von einem möglichen Kollisionsobjekt weggelenkt, so dass eine drohende Kollision gegebenenfalls verhindert werden kann, zum anderen wird der Fahrer intuitiv dazu angeregt, korrekt gegenzulenken, um den Schleuderzustand zu beenden und die Kontrolle über das Kraftfahrzeug wiederzuerlangen. Somit kann ein Schleuderzustand, also ein Fahren im Grenzbereich, in dem das Kraftfahrzeug um die Hochachse giert, sicherer und die Unfallwahrscheinlichkeit senkend beendet werden.

Dabei bietet das erfindungsgemäße Verfahren den besonderen Vorteil, dass es letztlich komplett auf bereits vorhandene Systeme und Informationen aufgesetzt werden kann. Wie bereits beschrieben, sind viele die Fahrdynamik beschreibende Parameter dem Fahrwerkregelsystem ohnehin bekannt oder werden durch dieses bestimmt. Das erfindungsgemäße Verfahren schlägt nun vor, diese Informationen neu zu verknüpfen, um weitere, ebenso bereits vorhandene Fahrzeugsysteme, beispielsweise ein Scheinwerfersystem, so anzusteuern, dass die vorteilhaften Effekte der Erfindung erzielt und der Hinweis erzeugt wird. Dies erfordert im Idealfall lediglich eine Änderung am Steuergerät.

Als Parameter können im Rahmen der vorliegenden Erfindung der Schwimmwinkel und/oder die Schwimmwinkelgeschwindigkeit und/oder die Gierwinkelabweichung berücksichtigt werden, selbstverständlich sind jedoch auch andere Parameter denkbar.

Die Wahl und Verknüpfung dieser fahrdynamischen Parameter hängt im Wesentlichen auch davon ab, auf welche Art und Weise die das Kraftfahrzeug stabilisierende Fahrtrichtung ermittelt werden soll. Dafür seien zwei im erfindungsgemäßen Verfahren zweckmäßig einsetzbare Alternativen näher dargestellt.

Zum einen kann vorgesehen sein, dass als das Kraftfahrzeug stabilisierende Fahrtrichtung die durch den Lenkwinkel des Kraftfahrzeugs bei Eintritt des Schleuderzustands definierte, fahrerseitig gewünschte Fahrtrichtung verwendet wird. In diesem Fall wird folglich der Blick des Fahrers dorthin gelenkt, wo er ursprünglich hinfahren wollte. Diese Information lässt sich beispielsweise aus dem Schwimmwinkel ablesen, der ja diesen definierenden Lenkwinkel zwangsläufig bereits enthält. So wird der Fahrer zum korrekten Gegenlenken animiert.

In einer anderen Variante kann vorgesehen sein, dass die das Kraftfahrzeug stabilisierende Fahrtrichtung als eine das Kraftfahrzeug optimal stabilisierende Fahrtrichtung insbesondere durch ein Steuergerät berechnet wird. In dieser Variante wird der Schleuderzustand des Kraftfahrzeugs, wie er durch die fahrdynamischen Parameter definiert wird, ausgewertet, und es wird mathematisch eine Fahrtrichtung ermittelt, deren Ansteuerung durch den Fahrer am besten zur Beseitigung des Schleuderzustands beiträgt. Die Berechnung kann dabei unter Berücksichtigung der Eigenschaften des Kraftfahrzeugs und/oder auch unter Berücksichtigung von vorhandenen Messdaten oder Hintergrundwissen über Schleudervorgänge erfolgen. Hierbei kann selbstverständlich auch eine dynamische Anpassung der das Kraftfahrzeug stabilisierenden Fahrtrichtung erfolgen, das bedeutet, die Situation wird kontinuierlich oder intermittierend neu bewertet und eine aktuelle das Kraftfahrzeug stabilisierende Fahrtrichtung ermittelt, bis der Schleuderzustand bzw. die kritische Situation beendet ist.

Das Fahrwerkregelsystem kann ein ESP-System oder ein ein ESP-System umfassendes Fahrwerkregelsystem sein. Wie bereits erwähnt, sind ESP-Systeme inzwischen wohlbekannt, so dass zur Durchführung des erfindungsgemäßen Verfahrens vorteilhaft auf diese aufgesetzt werden kann. Die grundliegende Funktionalität des ESP-Systems bleibt dabei natürlich erhalten; stabilisierende Maßnahmen des ESP-Systems können parallel zur Unterstützung des Fahrers durchgeführt werden.

Vorzugsweise kann als weiteres Fahrzeugsystem ein Scheinwerfersystem verwendet werden, um eine in die Fahrtrichtung gerichtete Lichtemission zu erzeugen. Dem liegt der Gedanken zugrunde, dass ein Fahrer, insbesondere bei schlechteren Sichtverhältnissen, wie beispielsweise Dunkelheit, intuitiv dem Scheinwerferlicht folgt, wobei dann keinerlei in einer kritischen Situation ohnehin schwer zu realisierenden Interpretationsprozesse nötig sind, um den Sinngehalt des Hinweises zu erfassen. Scheinwerfersysteme, deren Ausleuchtbereich veränderbar ist und/oder deren Abstrahlrichtung beispielsweise durch Verschwenkung der Scheinwerfer verändert werden kann, sind inzwischen bekannt und können vorteilhaft im Rahmen des erfindungsgemäßen Verfahrens genutzt werden. So kann beispielsweise vorgesehen sein, dass der Abstrahlwinkel von insbesondere verschwenkbaren Scheinwerfern des Scheinwerfersystems so verändert wird, dass die Scheinwerfer in die Fahrtrichtung abstrahlen. Beispielsweise kann vorgesehen sein, dass die Scheinwerfer um den Schwimmwinkel in die der Drehung des Kraftfahrzeugs um die Hochachse entgegengesetzten Richtung ausgelenkt werden. Dadurch leuchten die Scheinwerfer dorthin, wohin der Fahrer ursprünglich steuern wollte oder - im Fall einer neuberechneten das Kraftfahrzeug stabilisierenden Fahrtrichtung - wohin er idealerweise steuern sollte. Vorzugsweise kann dabei vorgesehen sein, dass vor dem Kraftfahrzeug, also in der aktuellen Ausrichtung des Kraftfahrzeugs, keine Ausleuchtung mehr erfolgt. Wenigstens bei Dunkelheit und/oder schlechter Sicht wird dabei die Wahrscheinlichkeit erhöht, dass der Fahrer, dem Scheinwerferlicht folgend, in die richtige Richtung sieht und damit das Fahrzeug abfangen und einen Unfall vermeiden kann. Folgt er mit der Lenkung dem Scheinwerferlicht, steuert er intuitiv richtig gegen. Es sei an dieser Stelle angemerkt, dass es selbstverständlich auch denkbar ist, nicht aktivierte Scheinwerfer, gegebenenfalls auch Zusatzscheinwerfer, insbesondere ein Abbiegelicht, zuzuschalten, um den Hinweis zu erzeugen.

In weiterer Ausgestaltung der vorliegenden Erfindung kann auch vorgesehen sein, dass der Hinweis ein auf die Fahrbahn projiziertes Lichtzeichen umfasst. So kann auch vorgesehen sein, beispielsweise einen Pfeil oder dergleichen zu erzeugen, der den Fahrer auf die das Kraftfahrzeug stabilisierende Fahrtrichtung hinweist. Beliebige Ausgestaltungen sind hier denkbar, insbesondere bei Systemen, bei denen der Ausleuchtbereich der Scheinwerfer beliebig anpassbar ist.

Besonders vorteilhaft in Kombination mit einem Scheinwerfersystem, aber auch alleinstehend bzw. alternativ denkbar kann vorgesehen sein, dass die Fahrtrichtung über ein insbesondere kontaktanaloges Head-Up-Display angezeigt wird. In einem solchen Fall wird eine Information, beispielsweise als Symbol oder dergleichen, so auf die Frontscheibe projiziert, dass die Aufmerksamkeit des Fahrers und somit sein Blick in die korrekte Richtung gelenkt werden.

Auch ein haptischer Hinweis auf die Fahrtrichtung ist im Rahmen der vorliegenden Erfindung denkbar. Beispielsweise kann ein Gegenmoment am Lenkrad erzeugt werden, um die Aufmerksamkeit des Fahrers zu erregen.

Neben dem Verfahren betrifft die Erfindung auch ein Kraftfahrzeug, welches insbesondere zur Durchführung des erfindungsgemäßen Verfahrens ausgebildet ist. Es umfasst ein Fahrwerkregelsystem, insbesondere ein ESP-System, mit einem zur Detektion eines Schleuderzustands und zur Bestimmung wenigstens eines die Fahrdynamik beschreibenden Parameters ausgebildeten Steuergerät und wenigstens einem weiteren Fahrzeugsystem, wobei das oder ein weiteres Steuergerät zur Ermittlung einer das Kraftfahrzeug stabilisierenden Fahrtrichtung und zur Ausgabe eines den Blick des Fahrers auf die ermittelte stabilisierende Fahrtrichtung lenkenden Hinweises über das weitere Fahrzeugsystem ausgebildet ist.

Mit einem solchen Kraftfahrzeug, auf das sich selbstverständlich sämtliche Ausführungen bezüglich des erfindungsgemäßen Verfahrens übertragen lassen, ist es mithin möglich, den Blick von einem potentiellen Kollisionsobjekt weg und zu einer das Kraftfahrzeug stabilisierenden Fahrtrichtung hinzulenken, so dass der Fahrer intuitiv zum Gegenlenken angeregt wird. Dem Fahrwerkregelsystem, insbesondere dem ESP-System, sind dabei beispielsweise verschiedene Sensoren zugeordnet, insbesondere Beschleunigungssensoren und/oder Querbeschleunigungssensoren und/oder Drehratensensoren und/oder Lenkwinkelsensoren, so dass der vom Fahrer gewünschte Zustand mit dem tatsächlichen Zustand des Kraftfahrzeugs verglichen werden kann, um festzustellen, ob außerhalb des Grenzbereichs gefahren wird, also insbesondere, ob ein Schleuderzustand vorliegt. Dies geschieht durch Auswertung der Sensordaten und gegebenenfalls weiterer Daten in dem Steuergerät des Fahrwerkregelsystems. Das Steuergerät des Fahrwerkregelsystems ist nun ferner dazu ausgebildet, bei einem detektierten Schleuderzustand eine das Kraftfahrzeug stabilisierende Fahrtrichtung zu ermitteln. Diese kann dann beispielsweise an das Steuergerät eines weiteren Fahrzeugsystems übertragen werden, welches dann den entsprechenden Hinweis, der den Blick des Fahrers auf die Fahrtrichtung lenkt, ausgibt.

Mit besonderem Vorteil kann das oder ein weiteres Fahrzeugsystem eine verschwenkbare und/oder in ihrem Ausleuchtbereich veränderbare Scheinwerfer umfassendes Scheinwerfersystem sein. Wie bereits oben dargelegt, können beispielsweise die Scheinwerfer entgegen der Drehrichtung des Kraftfahrzeugs um den Schwimmwinkel geschwenkt werden, so dass sie in die ursprünglich vom Fahrer gewünschte Fahrtrichtung leuchten, so dass dieser intuitiv, dem Scheinwerferlicht folgend, gegenlenken kann. Auch die Erzeugung von Lichtzeichen oder dergleichen ist denkbar.

Das oder ein weiteres Fahrzeugsystem kann ferner eine Anzeigevorrichtung, insbesondere ein Head-Up-Display, umfassen. Vorzugsweise handelt es sich dabei um ein kontaktanaloges Head-Up-Display. Dieses kann beispielsweise ergänzend zu einer Veränderung der Ausleuchtcharaktersitik der Scheinwerfer, beispielsweise einer Verschwenkung der Scheinwerfer, eingesetzt werden, ist jedoch grundsätzlich auch in Alleinstellung als Ausgabemittel für den Hinweis denkbar. Bei einem kontaktanalogen Display wird zusätzlich noch die Blickrichtung des Fahrers berücksichtigt, so dass beispielsweise ein die das Kraftfahrzeug stabilisierende Fahrtrichtung korrekt abbildender Pfeil auf die Windschutzscheibe projiziert werden kann.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: eine erläuternde Zeichnung zum Ablauf des erfindungsgemä- ßen Verfahrens, und
- Fig. 3: eine mögliche Anzeige eines kontaktanalogen Displays.

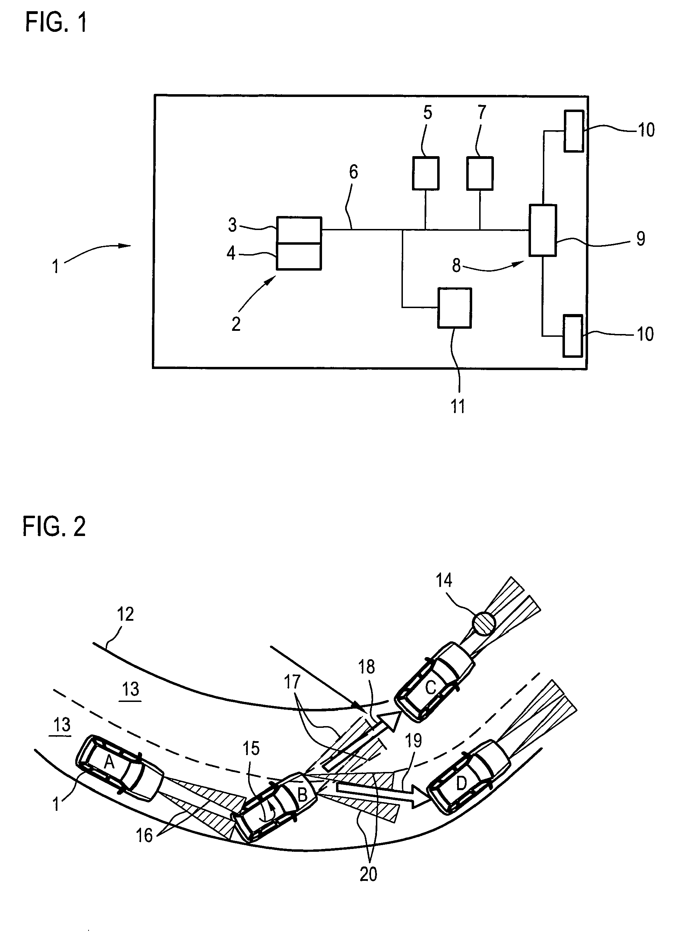

Fig. 1 zeigt ein erfindungsgemäßes Kraftfahrzeug 1. Es umfasst ein Fahrwerkregelsystem, hier ein ESP-System 2, welches vorliegend zentral im Kraftfahrzeug 1 angeordnet ist und ein Steuergerät 3 sowie eine Sensoranordnung 4 umfasst. Die Sensoranordnung 4 umfasst Beschleunigungssensoren, Drehratensensoren sowie eine Querbeschleunigungssensor. Daten mit anderen Fahrzeugsystemen, beispielsweise einem Lenkwinkelsensor 5, können über ein Bussystem 6, hier einen CAN-Bus, ausgetauscht werden.

Aufgrund der Sensordaten, insbesondere der Daten der Sensoren der Sensoranordnung 4 und des Lenkwinkelsensors 5 ermittelt das Steuergerät 3 eine Abweichung zwischen dem fahrerseitigen Bewegungswunsch und der tatsächlichen Bewegung des Kraftfahrzeugs 1, wozu insbesondere die Fahrdynamik des Kraftfahrzeugs 1 beschreibende Parameter bestimmt werden. Vorliegend wird beispielsweise die Solldrehrate mit der Istdrehrate verglichen. Im sogenannten Grenzbereich, wenn das Kraftfahrzeug noch nicht um die Hochachse giert, also kein Schleuderzustand vorliegt, versucht das ESP-System 2 durch gezieltes Bremsen einzelner Räder, ein Schleudern des Kraftfahrzeugs 1 zu verhindern und dem Fahrer so die Kontrolle über das Kraftfahrzeug zu sichern. Hierzu wird mit einem Bremsensteuergerät 7 kommuniziert. Außerhalb des Grenzbereiches, wenn also ein Schleuderzustand detektiert wird, werden ebenso Bremseingriffe vorgenommen, um das Kraftfahrzeug 1 wieder zu stabilisieren, was jedoch bekannt ist und hier nicht näher dargelegt werden soll.

Wurde ein Schleuderzustand detektiert, giert das Kraftfahrzeug folglich um die Hochachse, so ermittelt das Steuergerät 3 im erfindungsgemäßen Kraftfahrzeug 1 eine das Kraftfahrzeug stabilisierende Fahrtrichtung aus wenigstens einem die Fahrdynamik beschreibenden, durch das Fahrwerkregelsystem 2 bestimmten Parameter. In diese so ermittelte Fahrtrichtung soll nun der Blick des Fahrers gelenkt werden, um ein korrektes, das Kraftfahrzeug 1 stabilisierendes Gegenlenken bei diesem zu erreichen.

Das Kraftfahrzeug 1 umfasst nun ferner ein Scheinwerfersystem 8. Dieses umfasst über ein Steuergerät 9 ansteuerbare Frontscheinwerfer 10, deren Ausleuchtbereich veränderbar ist, hier durch Verschwenkung der Scheinwerfer 10 selber.

Ferner ist als weiteres Fahrzeugsystem ein Informationssystem vorgesehen, welches vorliegend ein kontaktanaloges Head-Up-Display 11 als Anzeigevorrichtung umfasst.

Das Steuergerät 3 ist nun dazu ausgebildet, als weiteres Fahrzeugsystem das Scheinwerfersystem 8 so anzusteuern, dass die das Kraftfahrzeug stabilisierende Fahrtrichtung ausgeleuchtet wird, das bedeutet, die Scheinwerfer 10 werden so verschwenkt, dass sie nun in die vom Steuergerät 3 bestimmte Fahrtrichtung leuchten. Der Fahrer wird dabei mit seinen Augen dem Scheinwerferlicht folgen und intuitiv korrekt gegenlenken.

Zur Bestimmung der das Kraftfahrzeug stabilisierenden Fahrtrichtung sind dabei im Wesentlichen zwei Varianten denkbar. Zum einen kann der im Steuergerät 3 ermittelte Schwimmwinkel berücksichtigt werden, der ja angibt, wie weit das Fahrzeug aus der vom Fahrer durch den Lenkwinkel gewünschten Richtung abgewichen ist. Die Scheinwerfer 10 können nun entgegen dieser Abweichung um den Schwimmwinkel verschwenkt werden, um den Fahrer zurück zu seiner ursprünglich gewünschten Fahrtrichtung zu führen.

In einer Alternative wird der durch die die Fahrdynamik beschreibenden Parameter beschriebene Gesamtzustand des Kraftfahrzeugs betrachtet und eine am besten geeignete Fahrtrichtung bestimmt, um das Kraftfahrzeug zu stabilisieren.

Zusätzlich oder alternativ kann, um die Aufmerksamkeit des Fahrers auf die zur Stabilisierung des Kraftfahrzeugs geeignete Fahrtrichtung zu lenken, auch das Head-Up-Display 11 verwendet werden. Beispielsweise kann durch Symbole oder dergleichen die Fahrtrichtung auf der Windschutzscheibe hervorgehoben werden.

Es sind selbstverständlich auch andere Varianten denkbar, um die Aufmerksamkeit des Fahrers auf die Fahrtrichtung zu lenken, beispielsweise Lichtzeichen wie Pfeile, die auf die Fahrbahn vor dem Kraftfahrzeug projiziert werden können oder dergleichen.

Fig. 2 erläutert die Funktionsweise des erfindungsgemäßen Verfahrens zur Unterstützung des Fahrers, wie es durch das Kraftfahrzeug 1 realisiert wird, näher. Gezeigt ist eine Straße 12 mit zwei Fahrspuren 13 und das Kraftfahrzeug 1 sowie die Ausleuchtbereiche seiner Scheinwerfer zu verschiedenen Zeitpunkten. Seitlich der Straßen befindet sich zudem ein Baum 14. In der Stellung A durchfährt das Kraftfahrzeug 1 die Kurve. In der Stellung B ist es ins Schleudern geraten, wie durch den Pfeil 15 (Drehung um die Hochachse) dargestellt wird. Wäre das Kraftfahrzeug nun nicht zur Durchführung des erfindungsgemäßen Verfahrens ausgestaltet, würden die Scheinwerfer 10 des Kraftfahrzeugs 1, wie anhand der Ausleuchtbereiche 16 in der Position A schon dargestellt ist, weiterhin vor das Kraftfahrzeug 1 leuchten, wie dies gestrichelt als Ausleuchtbereiche 17 in Position B dargestellt ist. Der Fahrer blickt gemäß dem Pfeil 18 nach vorne, auf den Baum 14 zu, und würde weiter unbewusst auf diesen zulenken, wie durch die Position C angedeutet wird.

Erfindungsgemäß ist nun aber vorgesehen, dass eine neue, das Kraftfahrzeug 1 stabilisierende Fahrtrichtung 19 ermittelt wird und die Scheinwerfer 10 entsprechend in diese Richtung abstrahlen, beispielsweise durch Verschwenkung um den Schwimmwinkel, wie durch die Ausleuchtbereiche 20 dargestellt wird. Der Fahrer folgt nun mit seinem Blick dem Scheinwerferlicht und lenkt dadurch intuitiv zurück: Das Fahrzeug kehrt also auf die richtig Fahrspur 13 zurück, Position D. So kann eine mögliche Kollision mit dem Baum 14 vermieden werden und der Fahrer wird dabei unterstützt, das Kraftfahrzeug 1 wieder zu stabilisieren.

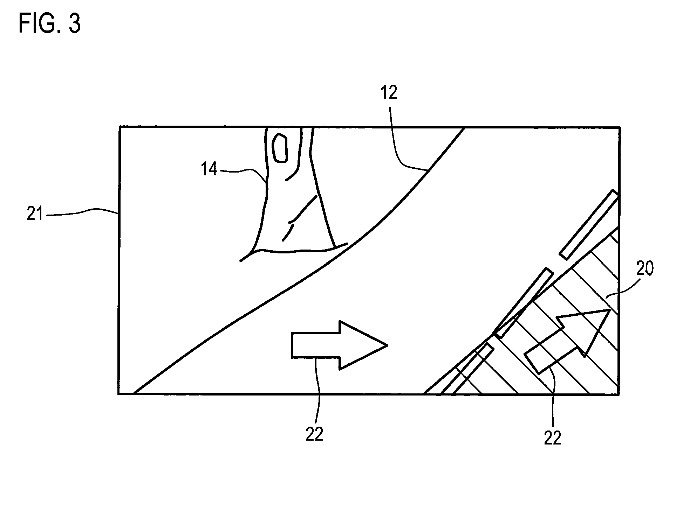

Fig. 3 zeigt schließlich eine mögliche Anzeige auf dem Head-Up-Display 11, also Informationen, die kontaktanalog auf die Windschutzscheibe 21 projiziert werden. Durch die Windschutzscheibe 21 sind die Straße 12 und der Baum 14 zu sehen, wenn sich das Kraftfahrzeug 1 in der Position B in Fig. 2 befindet. Auch zu erkennen sind die Ausleuchtbereiche 20, die die Scheinwerfer 10 gemäß der das Kraftfahrzeug stabilisierenden Fahrtrichtung 19 ausleuchten. Zusätzlich werden nun durch das kontaktanaloge Head-Up-Display Orientierungspfeile 22 für den Fahrer auf die Windschutzscheibe projiziert, um ihn weiter beim Gegensteuern zu unterstützen.

Es sei an dieser Stelle noch angemerkt, dass beim erfindungsgemäßen Kraftfahrzeug 1 selbstverständlich weiterhin das ESP-System 2 seine üblichen Maßnahmen zur Stabilisierung des Kraftfahrzeugs 1 durchführt. Parallel dazu wird jedoch dem Fahrer der Hinweis gegeben, wie er den Stabilisierungsvorgang unterstützen kann und wieder auf seinen ursprünglichen Weg zurückkehren kann.

## Patentansprüche

1. Verfahren zur Unterstützung eines Fahrers eines Kraftfahrzeugs während eines Schleudervorgangs,
**dadurch gekennzeichnet, dass**
- von einem Fahrwerkregelsystem ein Schleuderzustand detektiert wird,
- aus wenigstens einem die Fahrdynamik beschreibenden, durch das Fahrwerkregelsystem bestimmten Parameter eine das Kraftfahrzeug stabilisierende Fahrtrichtung ermittelt wird,
- durch wenigstens ein weiteres Fahrzeugsystem ein den Blick des Fahrers auf die ermittelte stabilisierende Fahrtrichtung lenkender Hinweis erzeugt wird.

2. Verfahren nach Anspruch 1,
**dadurch gekennzeichnet,**
**dass** als Parameter der Schwimmwinkel und/oder die Schwimmwinkelgeschwindigkeit und/oder die Gierwinkelabweichung berücksichtigt werden.

3. Verfahren nach Anspruch 1 oder 2,
**dadurch gekennzeichnet,**
**dass** als das Kraftfahrzeug stabilisierende Fahrtrichtung die durch den Lenkwinkel des Kraftfahrzeugs bei Eintritt des Schleuderzustands definierte, fahrerseitig gewünschte Fahrtrichtung verwendet wird.

4. Verfahren nach Anspruch 1 oder 2,
**dadurch gekennzeichnet,**
**dass** die das Kraftfahrzeug stabilisierende Fahrtrichtung als eine das Kraftfahrzeug optimal stabilisierende Fahrtrichtung insbesondere durch ein Steuergerät berechnet wird.

5. Verfahren nach einem der vorangehenden Ansprüche,
**dadurch gekennzeichnet,**
**dass** als Fahrwerkregelsystem ein ESP-System oder ein ein ESP-System umfassendes Fahrwerkregelsystem verwendet wird.

6. Verfahren nach einem der vorangehenden Ansprüche,
**dadurch gekennzeichnet,**
**dass** als weiteres Fahrzeugsystem ein Scheinwerfersystem verwendet wird, um eine in die Fahrtrichtung gerichtete Lichtemission zu erzeugen.

7. Verfahren nach Anspruch 6,
**dadurch gekennzeichnet,**
**dass** der Abstrahlwinkel von insbesondere verschwenkbaren Scheinwerfern des Scheinwerfersystems so verändert wird, dass die Scheinwerfer in die Fahrtrichtung abstrahlen.

8. Verfahren nach Anspruch 6 oder 7,
**dadurch gekennzeichnet,**
**dass** der Hinweis ein auf die Fahrbahn projiziertes Lichtzeichen umfasst.

9. Verfahren nach einem der vorangehenden Ansprüche,
**dadurch gekennzeichnet,**
**dass** die Fahrtrichtung über ein insbesondere kontaktanaloges Head-Up-Display angezeigt wird.

10. Kraftfahrzeug (1), insbesondere ausgebildet zur Durchführung des Verfahrens nach einem der Ansprüche 1 bis 9, umfassend ein Fahrwerkregelsystem, insbesondere ein ESP-System (2), mit einem zur Detektion eines Schleuderzustands und zur Bestimmung wenigstens eines die Fahrdynamik beschreibenden Parameters ausgebildeten Steuergerät (3) und wenigstens einem weiteren Fahrzeugsystem, wobei das oder ein weiteres Steuergerät (3, 9) zur Ermittlung einer das Kraftfahrzeug (1) stabilisierenden Fahrtrichtung (19) und zur Ausgabe eines den Blick des Fahrers auf die ermittelte stabilisierende Fahrtrichtung (19) lenkenden Hinweises über das weitere Fahrzeugsystem ausgebildet ist.

11. Kraftfahrzeug nach Anspruch 10,
**dadurch gekennzeichnet,**
**dass** das oder ein weiteres Fahrzeugsystem ein verschwenkbare und/oder in ihrem Ausleuchtbereich veränderbare Scheinwerfer (10) umfassendes Scheinwerfersystem (8) ist.

12. Kraftfahrzeug nach Anspruch 10 oder 11,
**dadurch gekennzeichnet,**
**dass** das oder ein weiteres Fahrzeugsystem eine Anzeigeeinrichtung, insbesondere ein Head-Up-Display (11), umfasst.
